# EUROPEAN PATENT SPECIFICATION

(11) **EP 0 484 900 B1**
(45) Date of publication and mention of the grant of the patent: **15.02.1995**
(21) Application number: 91118901.7
(22) Date of filing: 06.11.1991
(51) Int. Cl.: B41J 2/52, B41J 2/525, H04N 1/40

(54) **Method and apparatus for changing the colour density in a printer**
Verfahren und Vorrichtung zum Ändern der Farbdichte für einen Drucker
Méthode et appareil pour modifier la densité des couleurs dans une imprimante

(30) Priority: 09.11.1990 JP 302781/90
(43) Date of publication of application: 13.05.1992
(73) Proprietor: MITSUBISHI DENKI KABUSHIKI KAISHA, Tokyo (JP)
(72) Inventor: Takakuwa, Kiyoshi, c/o Mitsubishi Denki K.K., Fukuyama-shi, Hiroshima (JP); Oda, Keisuke, c/o Mitsubishi Denki K.K., Fukuyama-shi, Hiroshima (JP)
(74) Representative: Lehn, Werner, Dipl.-Ing.

(56) References cited:
- EP-A- 0 424 920
- US-A- 4 340 911
- PATENT ABSTRACTS OF JAPAN vol. 14, no. 273 (E-94)13 June 1990 & JP-A-2 084 876 ( RICOH ) 26 March 1990
- PATENT ABSTRACTS OF JAPAN vol. 14, no. 69 (M-932)(4012) 8 February 1990 & JP-A-1 288 465 ( MITSUBICHI ) 20 November 1989
- PATENT ABSTRACTS OF JAPAN vol. 14, no. 58 (M-93)2 February 1990 & JP-A-1 285 349 ( CANON ) 16 November 1989
- PATENT ABSTRACTS OF JAPAN vol. 13, no. 567 (M-908)15 December 1989 & JP-A-1 238 958 ( KONICA ) 25 September 1989
- PATENT ABSTRACTS OF JAPAN vol. 12, no. 311 (M-734)24 August 1988 & JP-A-63 082 762 ( RICOH ) 13 April 1988
- PATENT ABSTRACTS OF JAPAN vol. 11, no. 39 (M-559)5 February 1987 & JP-A-61 206 674 ( YOKOGAWA ) 12 September 1986

## Description

### BACKGROUND OF THE INVENTION

The present invention relates to a printer for printing data inputted from a host computer.

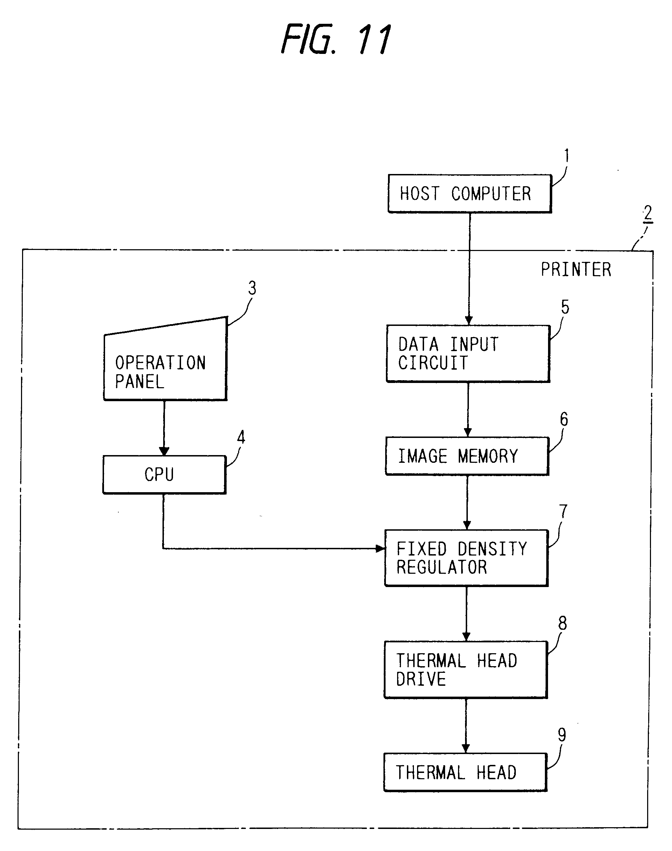

Describing a prior art, Fig. 11 shows, in block form, a typical example of a conventional printer together with a host computer connected to the printer.

In Fig. 11, the printer 2 comprises an operation panel 3 for regulating density of respective colors of a print, a CPU 4 connected to the operation panel 3, a data input circuit 5 connected to the external host computer 1 such as personal computer to receive an image information therefrom, an image memory 6 connected to the input circuit 5 to store the image information, a fixed density regulator circuit 7 connected to the CPU 4 and the image memory 6 and constituted with, for example, a ROM , to regulate the image information read out from the image memory 6 according to color regulation information supplied from the operation panel 3 through the CPU 4, a thermal head drive circuit 8 connected to the fixed density regulator circuit 7 and a thermal head 9 connected to the thermal head drive circuit 8.

Since characteristics of ink sheet and/or printer to be used to print image data supplied by the host computer 1 varies printer by printer, it is necessary, in order to obtain a satisfactory print by using any available printer and ink sheet, that colors Y (yellow), M (magenta), C (cyan) and BK (black) of the print are regulated in density correspondingly to the printer and ink sheet used.

In the conventional printer 2, such regulation has been performed by an operator through the operation panel 3. That is, one of a plurality of predetermined density regulating data preliminarily stored in the fixed density regulator circuit 7 is selected by the operator through the operation panel 3 and the CPU 4 and data from the host computer 1 are passed through the data input circuit 5 and the image memory 6, regulated in color density according to the selected regulation data by the fixed density regulator circuit 7 and printed through the thermal head drive circuit 8 and the thermal head 9.

The user looks at the resultant print and regulates densities of respective colors through the operation panel 3 if the print is not satisfactory, and this procedure is repeated until a fully satisfactory print is obtained.

Since, in the conventional printer mentioned above, the regulation of color density is performed repeatingly in try-and-error manner, it is troublesome and inefficient.

From JP 1238958 a printing density controller for enabling constant colouring density is known. A specific test pattern is printed each time thermo-sensible paper is exchanged. The controller includes a density sensor supplying a detection signal to an A/D converter for converting the detection signal into a digital signal. The digital signal is supplied to a pulse width setting circuit.

From JP 63 082 762 a printing density regulator is known for stabilizing the printing density. Printing densities are classified into a plurality of levels, and a plurality of resistors corresponding to a required printing density are provided. According to the required density level, anyone of the resistors is selected with a switch.

### SUMMARY OF THE INVENTION

An object of the present invention is to provide a printer capable of automatically and efficiently regulating color density.

According to the present invention this object is solved by a printer for printing data inputted from a host computer, said data including image data and commands instructing a change of density of at least one colour to be printed; the printer comprising
- a central processing unit receiving said commands via a command input circuit;
- a variable density regulator receiving from the host computer during a usual printing operation image data, correcting said image data and supplying the corrected image data to an image memory;
- an optical density meter for reading out the density of a printed test pattern;
- said host computer comparing said read density with density data on a standard optical density pallet and calculating correction data to be loaded into the variable density regulator circuit; and
- a fixed density regulator circuit receiving image data from said variable density regulator and outputting image data to a thermal head drive unit on which data a further density regulation of at least one colour to be printed has been performed under control of said central processing unit in response to a received command.

In the present invention, the density of the input data is regulated by the first density regulating means according to the first operation. The density of the output of the first density regulating means is regulated by the second density regulating means according to the second operation and the output of the second density regulating means is printed.

In a printer of sublimation type factors such as color density determing factors, etc., which are necessary to obtain a constant print quality regardless of variation of ink sheet and/or variation of printer to be used, can be set arbitrarily by sending a command by an operator through a host computer.

### BRIEF DESCRIPTION OF THE DRAWINGS

Fig. 1 is a block diagram showing an embodiment of the present invention;
Fig. 2 is a block circuit diagram of a variable density regulator circuit according to an embodiment of the present invention;
Fig. 3 is a graph showing a density characteristics of the variable density regulator circuit;
Figs. 4 to 6 show characteristics of a fixed density regulator circuit according to an embodiment of the present invention;
Fig. 7 shows a procedure for regulating density according to the present invention;
Fig. 8 shows a standard OD pallet used in regulating density;
Fig. 9 shows density measuring points on a print sheet;
Fig. 10 shows characteristics of density correcting data loaded to the variable density regulator circuit; and
Fig. 11 is a block diagram showing a conventional printer.

### DETAILED DESCRIPTION OF THE PREFERRED EMBODIMENTS

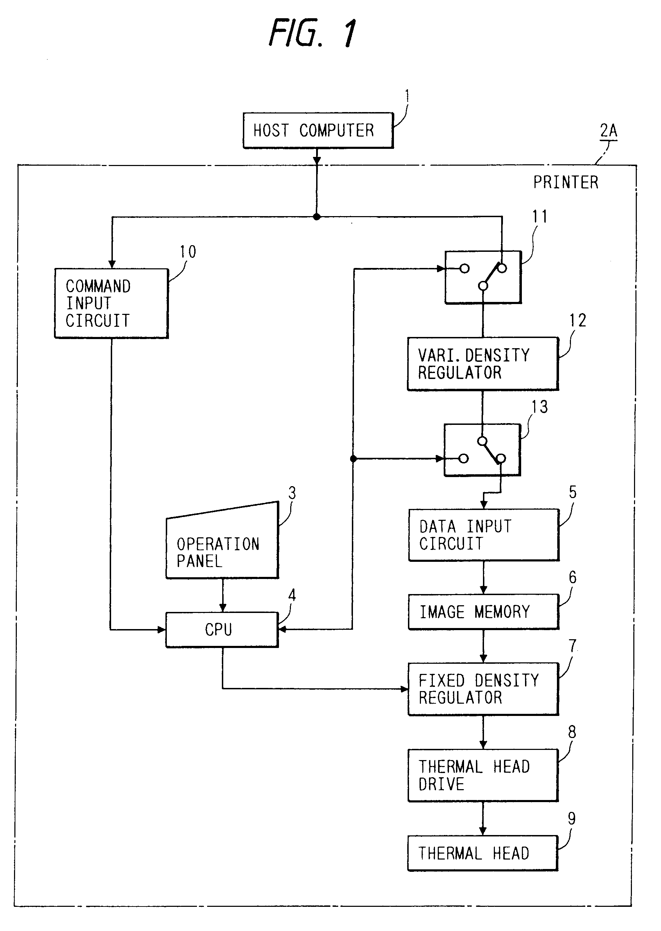

The present invention will be described with reference to Fig. 1 which is a block diagram of an embodiment of the printer according to the present invention.

In Fig. 1, a printer 2A is connected to a host computer 1. The printer 2A in this embodiment includes, in addition to an operation panel 3, a CPU 4, a data input circuit 5, an image memory 6, a fixed density regulator circuit 7, a thermal head drive circuit 8 and a thermal head 9 connected to the thermal head drive circuit 8 shown in Fig. 11, a command input circuit 10 having an input connected to the host computer 1 and an output connected to a CPU 4, a variable density regulator circuit 12 composed of EEPROM, etc., a change-over switch 11 for selectively connecting an input of the variable density regulator circuit 12 to the host computer 1 or to the CPU 4, a second change-over switch 13 for selectively connecting an input of the data input circuit 5 to an output of the variable density regulator circuit 12 or connecting the variable density regulator 12 to the CPU 4.

The command input circuit 10, the CPU 4, the switch circuits 11 and 13 and the variable density regulator circuit 12 constitute first density regulator means and the command input circuit 10, the operation panel 3, the CPU 4 and the fixed density regulator circuit 7 constitute second density regulator means. The thermal head drive circuit 8 and the thermal head 9 constitute output means.

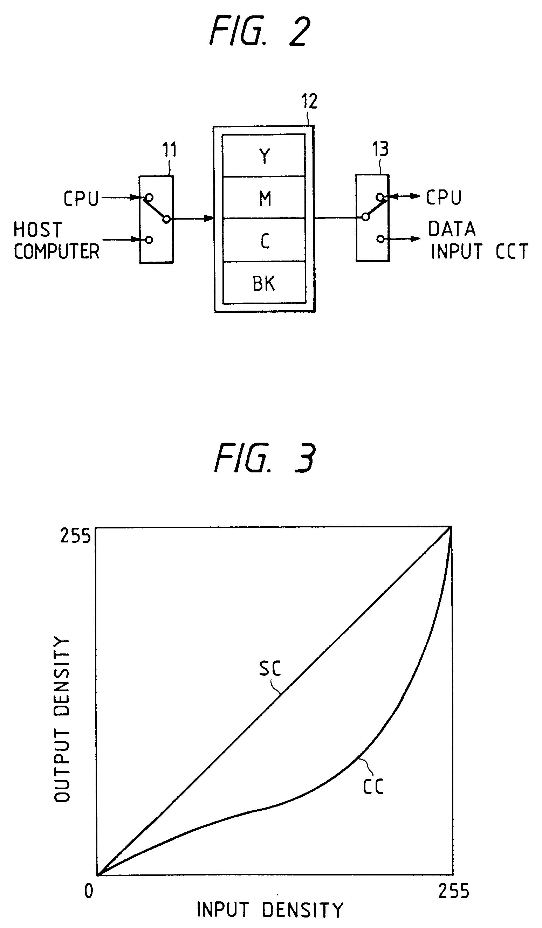

Fig. 2 is a block diagram showing the switch circuits 11 and 13 and the variable density regulator circuit 12 in more detail and Fig. 3 shows a density characteristics of the variable density regulator circuit 12, in which input density and output density are plotted along abscissa and ordinate, respectively, scaled from 0 to 255 to cover 256 levels each represented by 8 bits. The larger the value indicates the higher the density. A curve SC is a standard curve and a curve CC is a correction curve.

In a usual printing operation, the switches 11 and 13 are in the positions shown in Fig. 1 and image data from the host computer 1 is loaded in the variable density regulator circuit 12, corrected according to the standard curve SC and supplied through the switch 13 to the data input circuit 5. Subsequent operation to this is the same as that of the conventional printer.

Assuming that an operator who looks at a resultant print decides that data loaded in the variable density regulator circuit 12, he provides through the host computer 1 a command C1 instructing a rewriting of data in the variable density regulator circuit 12 and correction data for colors Y, M, C and BK to the command input circuit 10 of the printer 2A.

The CPU 4 responds to the command C1 sent through the command input circuit 10 to actuate the switch circuits 11 and 13 to the state shown in Fig. 2 so that the correction data is supplied to the variable density regulator circuit 12.

For example, when γ conversion data is sent to the variable density regulator circuit 12 as the correction data, the density characteristics of the variable density regulator circuit 12 becomes that shown by the correction curve CC in Fig. 3. Therefore, it becomes possible to arbitrarily regulate density by the user through the host computer 1. Thus, the first density regulation is performed.

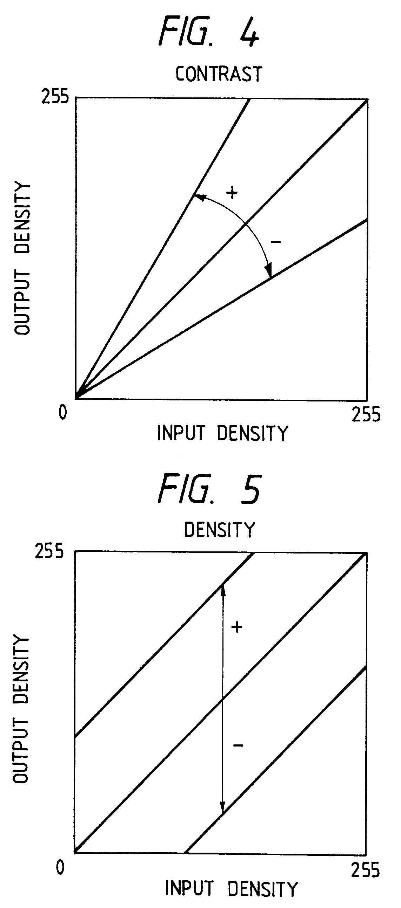

Then, the second density regulation is performed. This will be described with reference to Figs. 4 to 6.

The relation between input density and output density is generally represented by the following equation:

${\text{Y = AX}}^{\text{γ}} \text{+ B}$

where X represents input density, Y output density, A a parameter indicating contrast, B a parameter indicating density and γ a parameter indicating gamma.

Figs. 4 to 6 show density characteristics of the fixed density regulator circuit 7 with abscissa and ordinate showing output density in 256 (0 to 255) levels, for contrast parameter A, density parameter B and gamma parameter, respectively.

Therefore, by changing values of the respective parameters, it is possible to select any of various density characteristics.

When a command C2 instructing changing of parameter A is sent by the operator from the host computer 1 to the command input circuit 10, the CPU 4 causes the fixed density regulator circuit 7 which has been loaded with a plurality of data including different values of respective parameters A, B and γ to select a density charateristics of different contrast such as shown in Fig. 4. For example, when the parameter A has a large value, the contrast becomes large and vice versa.

Similarly, when the host computer 1 sends a command C3 instructing changing parameter B to the command input circuit 10, the CPU 4 causes the fixed density regulator circuit 7 to select the density characteristics of different density such as shown in Fig. 5. The larger the value of the parameter B results in the larger the density and vice versa.

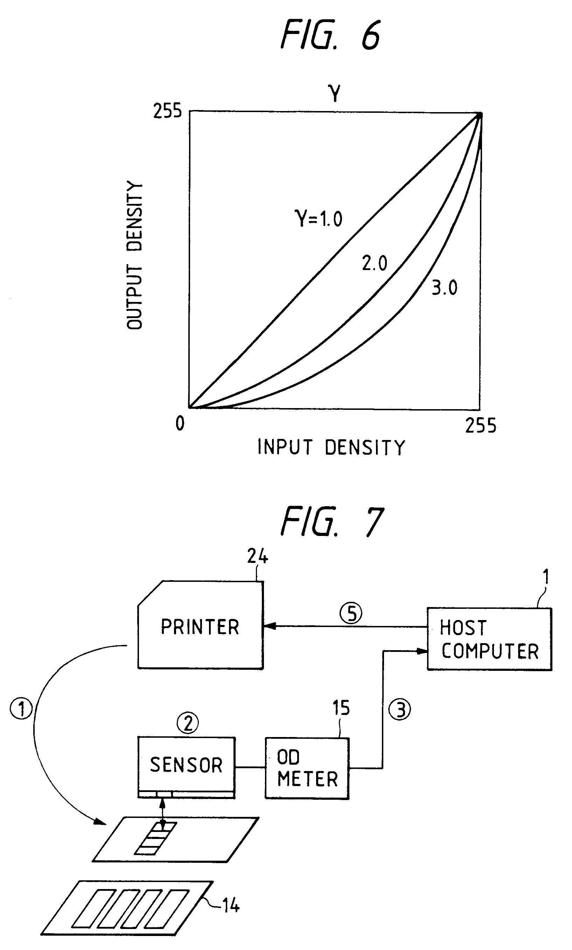

When the host computer 1 sends a command C4 instructing changing γ value to the command input circuit 10, the CPU 4 causes the fixed density regulator circuit 7 to select the density characteristics with different gamma value. For example, with parameter γ = 1.0, 2.0 or 3.0, the characteristics shown in Fig. 6 is selected by the fixed density regulator circuit 7.

Therefore, the user can regulate the density of print by sending any command through the host computer 1.

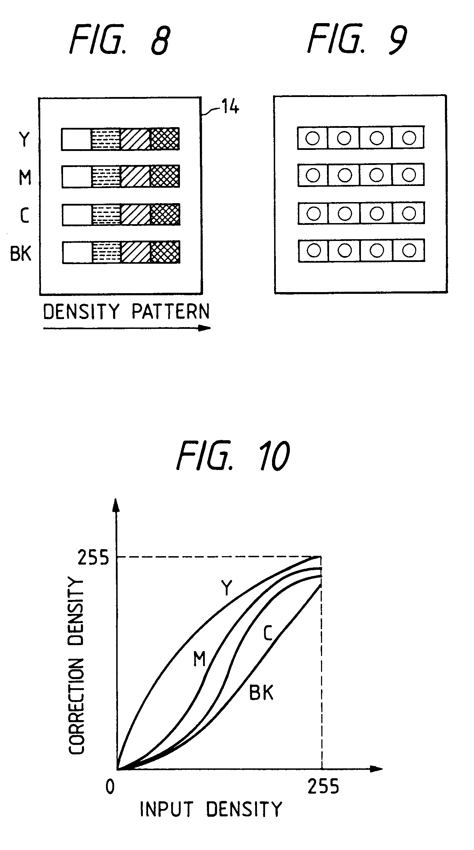

Now, the procedure of the first density regulation described with reference to Figs. 2 and 3 will be described in more detail with reference to Figs. 7 to 10, in which Fig. 7 illustrates the procedure for the first density regulation which includes steps 1 to 5, Fig. 8 shows a standard optical density (OD) pallet 14 showing patterns of colors Y, M, C and BK each printed with different densities, Fig. 9 shows a pattern of measuring points on a print sheet for measuring density and Fig. 10 shows a characteristics indicating a correction density data to be loaded in the variable density regulator circuit 12.

It should be noted that the host computer 1 has held density data read out by an OD meter 15 which may be replaced by a scanner at the respective measuring points on the standard OD pallet 14.

In the first step 1 in Fig. 7, the printer 2A prints a test pattern on the basis of the density data on the standard OD pallet 14.

In the second step 2, the density of the printed test pattern is read out at the measuring points shown in Fig. 9 by the OD meter 15.

In the third step 3, the density data of the respective measuring points on the test pattern thus read out is sent to the host computer 1.

In the fourth step 4, the host computer 1 compares the density data of the standard OD pallet 14 with the density data of the test pattern on which it calculates correction γ curves for the respective colors as shown in Fig. 10 by, for example, increasing or decreasing the density data of the standard OD pallet 14 so that the comparison indicates an equality. Further, the host computer 1 indicates subsequent steps to be employed on a display such as CRT.

In the step 5, the user looks at the comparison result displayed on the display device, inputs the command C1 through the host computer 1 to instruct the printer 2A to load the correction data to the variable density regulator circuit 12. The host computer 1 sends to the variable density regulator circuit 12 data of the correction γ curves for the respective colors to update the content of the variable density regulator circuit 12.

The second density regulation may be used in a case where a user wishes to change color or colors arbitrarily. In such case, the user looks at the print and sends through the host computer 1 the command C2, C3 or C4 or any combination of them to the printer 2A to perform a further density regulation of at least one color by means of the fixed density regulator circuit 7.

As described, since the present invention comprises the variable density regulator circuit 12 which can regulate density of a print totally and the fixed density regulator circuit 7 which can regulate a portion of the print finely and the settings of the γ curves and density determining factors of respective colors can be done by the commands from the host computer 1, the density regulation can be done automatically and efficiently.

Although, in the described embodiment, the fixed density regulator circuit 7 is set by the commands from the host computer 1, it is possible to perform the same through the operation panel 3 of the printer 2A with the same effect.

## Claims

1. A printer for printing data inputted from a host computer (1), said data including image data and commands instructing a change of density of at least one colour to be printed; the printer comprising :
- a central processing unit (4) receiving said commands via a command input circuit (10);
- a variable density regulator (12) receiving from the host computer (1) during a usual printing operation image data, correcting said image data and supplying the corrected image data to an image memory (6);
- an optical density meter (15) for reading out the density of a printed test pattern;
- said host computer (1) comparing said read density with density data on a standard optical density pallet (14) and calculating correction data to be loaded into the variable density regulator circuit (12); and
- a fixed density regulator circuit (7) receiving image data from said variable density regulator (12) and outputting image data to a thermal head drive unit (8) on which data a further density regulation of at least one colour to be printed has been performed under control of said central processing unit (4) in response to a received command.

2. A printer according to claim 1,
**characterized** by switch means (11, 13) responsive to a command from said host computer (1) to cause said variable density regulator (12) to load said correction data.

## Patentansprüche

1. Drucker zum Drucken von von einem Hostcomputer (1) eingegebenen Daten, wobei die Daten Bilddaten und Befehle einschließen, welche eine Dichteänderung wenigstens einer zu druckenden Farbe anweisen; wobei der Drucker umfaßt:
- eine zentrale Verarbeitungseinheit (4), welche die Befehle über einen Befehlseingabeschaltkreis (10) empfängt;
- einen Einsteller (12) für variable Dichte, welcher von dem Hostcomputer (1) während eines gewöhnlichen Druckvorganges Bilddaten empfängt, die Bilddaten korrigiert und die korrigierten Bilddaten an einen Bildspeicher (6) liefert;
- eine Meßeinrichtung (15) für optische Dichte zum Auslesen der Dichte eines gedruckten Testmusters;
- wobei der Hostcomputer (1) die gelesene Dichte mit Dichtedaten auf einer Standard-Palette (14) optischer Dichte vergleicht und in den Einstellschaltkreis (12) für variable Dichte zu ladende Korrekturdaten berechnet; und
- einen Einstellschaltkreis (7) für feste Dichte, welcher Bilddaten von dem Einsteller (12) für variable Dichte empfängt und Bilddaten an eine Thermokopf-Treibereinheit (8) ausgibt, an welchen Daten eine weitere Dichteeinstellung von wenigstens einer zu druckenden Farbe unter Steuerung der zentralen Verarbeitungseinheit (4) auf einen empfangenen Befehl hin durchgeführt worden ist.

2. Drucker nach Anspruch 1, gekennzeichnet durch Schalteinrichtungen (11, 13), welche auf einen Befehl von dem Hostcomputer (1) ansprechen, um zu bewirken, daß der Einsteller (12) für variable Dichte die Korrekturdaten lädt.

## Revendications

1. Imprimante pour imprimer des données introduites depuis un ordinateur serveur (1), lesdites données comprenant des données d'image et des commandes ordonnant une modification de densité d'au moins une couleur à imprimer; l'imprimante comportant:
- une unité centrale (4) recevant lesdites commandes via un circuit d'introduction des commandes (10);
- un régulateur de densité variable (12) recevant des données d'image de l'ordinateur serveur (1) pendant une opération habituelle d'impression de données d'image, corrigeant lesdites données d'image et fournissant les données d'image corrigées à une mémoire d'image (6);
- un dispositif de mesure de la densité optique (15), pour lire la densité d'un motif d'essai imprimé;
- ledit ordinateur serveur (1) comparant ladite densité lue à des données de densité d'une palette normalisée (14) de densités optiques, et calculant des données de correction à charger dans le circuit régulateur de densité variable (12); et
- un circuit régulateur de densité fixe (7) recevant des données d'image dudit régulateur de densité variable (12) et délivrant des données d'image à destination d une unité d'entraînement d'une tête thermique (8), une régulation supplémentaire de densité d'au moins une couleur à imprimer ayant été effectuée sur ces données sous la commande de ladite unité centrale (4) en réponse à une commande reçue.

2. Imprimante selon la revendication 1, caractérisée par des moyens de commutation (11, 13) répondant à une commande dudit ordinateur serveur (1) pour que ledit régulateur de densité variable (12) charge lesdites données de correction.
